(19) Europäisches Patentamt
European Patent Office
Office européen des brevets

(11) **EP 2 096 770 B1**

(12) **EUROPÄISCHE PATENTSCHRIFT**

(45) Veröffentlichungstag und Bekanntmachung des Hinweises auf die Patenterteilung:
**10.04.2013 Patentblatt 2013/15**

(21) Anmeldenummer: **09100119.8**

(22) Anmeldetag: **18.02.2009**

(51) Int Cl.:
***H04B 3/46*** *(2006.01)*

(54) **Bewertung frequenzabhängiger resonanzförmiger NEXT Kopplungen**

Evaluation of frequency-dependent resonant NEXT couplings

Evaluation de couplages NEXT sous forme de résonance et dépendant de la fréquence

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **28.02.2008 DE 102008011777**

(43) Veröffentlichungstag der Anmeldung:
**02.09.2009 Patentblatt 2009/36**

(73) Patentinhaber: **Deutsche Telekom AG**
**53113 Bonn (DE)**

(72) Erfinder: **Muggenthaler, Peter**
**64397, Modautal (DE)**

(74) Vertreter: **Kohlhof, Stephan et al**
**Braun-Dullaeus Pannen**
**Patent- und Rechtsanwälte**
**Platz der Ideen 2**
**40476 Düsseldorf (DE)**

(56) Entgegenhaltungen:
**EP-A- 1 193 907          US-A- 5 821 760**
**US-A1- 2005 012 508**

**Beschreibung**

Die Erfindung betrifft ein Verfahren zur Bestimmung der Qualität eines zur Übertragung elektrischer Signale geeigneten Kabels, insbesondere eines Kupfer-Kabels, mit mehreren Adern, insbesondere mit mehreren Doppeladern miteinander verdrillter Aderpaare, wobei zwei an einem Ende des Kabels austretende Adern ausgewählt werden, wobei im Rahmen einer Messung ein Testsignal bestimmter Frequenz über die erste Ader gesendet und das von dem Testsignal erzeugte Kopplungssignal in der zweiten Ader registriert wird, wobei eine Vielzahl von über ein Frequenzintervall erhobenen Messwerten eine Messreihe bilden und wobei aus einer oder mehreren Messreihen auf die Qualität des Kabels geschlossen wird.

Heutzutage werden über Vielfachkabel, die eine große Anzahl zwischen einigen und bis zu 2000 Doppeladern aus paarweise verdrillten dünnen Adern aufweisen, unterschiedliche Dienste abgewickelt, die, wie beispielsweise xDSL, einer hohen Übertragungsrate insbesondere einer hohen Bitrate bedürfen. Um Systeme zur Umsetzung solcher Dienste planen zu können, ist eine möglichst genaue Kenntnis der physikalischen Parameter nötig. So hängt beispielsweise die mögliche Übertragungsrate von xDSL Systemen maßgeblich vom entsprechenden Signal-Geräusch-Abstand (SNR) der entsprechenden Kabelabschnitte ab, wobei der SNR wiederum von der messbaren Kabeldämpfung einerseits und vom dem kaum determinierbaren Nebensprechen zwischen einzelnen Doppeladern andererseits abhängt.

Über dieses Nebensprechen, also der ungewollten Signal-Kopplung zwischen einzelnen Doppeladern, beeinflussen sich die xDSL Systeme gegenseitig. Dabei hängt die Stärke der Nebensprechkopplungen von der Qualität der Kabel sowie insbesondere von der Verseilungsqualität der Doppeladern und von deren Abstand ab.

Das Ausmaß der Nebensprechkopplungen ist nicht vorhersagbar. Es hat sich aber gezeigt, dass sich die relative Stärke der Nebensprech-Kopplungen innerhalb einzelner Bündel mehrerer Doppeladern auf statistische Nebensprechmodelle zurückführen lässt. Dabei teilt sich das Nebensprechen in das Nahnebensprechen ("NEXT") und in das Fernnebensprechen ("FEXT") auf. NEXT tritt zwischen den Doppeladern am gleichen Kabelende auf, während FEXT zwischen Doppeladern des einen und des anderen Kabelendes stattfindet. Zwischen NEXT und FEXT gibt es statistische Zusammenhänge, die sich in den oben genannten Nebensprechmodellen niederschlagen.

Um die Qualität eines Kabels zu ermitteln ist es bekannt, einige NEXT- und FEXT-Werte eines Kabels durch Messung zu ermitteln. Allerdings ist das Problem der Messung von FEXT- Werten, dass gleichzeitig zwei Mitarbeiter an den beiden Enden des zu messenden Kabels erforderlich sind, so dass diese Messungen in der Regel nicht durchgeführt werden. Zudem müssen zur Erfassung der typischen FEXT Werte etwa fünfmal so viele Messungen durchgeführt werden, wie im Falle des NEXT. Solche Messungen sind daher unter wirtschaftlichen Gesichtspunkten kaum durchführbar.

Tatsächlich wird zur Bestimmung der Qualität eines Kabels im Regelfall nur das NEXT zwischen einigen Doppeladern eines Kabels gemessen, wobei mittels eines xDSL-Testgerätes, insbesondere eines ELQ30 oder einem vergleichbaren Gerät, Messreihen von NEXT (f) Werten aufgenommen. Allerdings ist der frequenzabhängige Verlauf der NEXT Kopplung stark resonanzbehaftet, so dass die nach den bislang verwendeten Verfahren gemessenen Größen nur bedingt zur unmittelbaren Bestimmung der Qualität herangezogen werden können.

Solche Messreihen werden bekanntermaßen bei zwei Gelegenheiten aufgenommen: Das ist zum einen nach der Errichtung einer neuen Erdkabeltrasse oder nach Auswechslung eines Kabelabschnitts im Rahmen der Abnahmemessung. Zum anderen im Störungsfall, wenn beispielsweise über eine Erdkabeltrasse betriebene xDSL-Systeme nicht oder mit zu geringem Signal-Geräusch-Abstand synchronisieren. Im Rahmen solcher Messungen werden NEXT(f) Werte bei einer oder mehreren Einzelfrequenzen gemessen und als Einzelwerte in Prüfprotokollen dokumentiert. Das Problem solcher Einzelmessung ist, wie oben angedeutet, dass die Resonanzen nur unvollständig erfasst werden, respektive dass aus der zufälligen Messung innerhalb einer Resonanz fälschlicherweise auf die Qualität geschlossen und entweder eine zu starke oder eine viel zu schwache NEXT Kopplung suggeriert.

Andererseits werden spezielle Messgeräte, beispielsweise ein sogenanntes ELQ30, verwendet, die automatisch eine Vielzahl, beispielsweise 300, NEXT Werte über ein ganzes Frequenzintervall mit hoher Dichte aufnehmen und diese in einer Tabelle speichern und/oder als Messkurve ausgeben. Aus dem Vergleich solcher Messkurven kann die NEXT Kopplung eines Paares von Doppeladern im Verhältnis zu der eines anderen Paares visualisiert werden. Allerdings kommt aus diesen Messungen kein aussagekräftiger und mit anderen Messungen vergleichbarer Wert heraus, der unmittelbar als Qualitätsangabe herhalten kann.

Aus der US 2005/0012508 A1 ist ein Verfahren und eine Anordnung zum Erkennen von Nebensprechen bekannt. Ein periodisches Testsignal mit einer ansteigenden Frequenz wird den Leiter eines Übertragungskabel eingeleitet. Ein Nebensprechsignal wird in einem anderen Leiter des Kabels empfangen und wird im Frequenzebene untersucht, um die Art der Nebenspracheffekte zu ermitteln. Ein ähnliches Testgerät ist auch aus der US 5,821,760 A bekannt.

Die EP 1 193 907 A2 offenbart ein Testgerät zum Testen von Netzwerken. Dieses umfasst einen Pseudozufallszahlenfolgengenerator zum Erzeugen mindestens einer ersten und einer zweiten Pseudozufallszahlenfolge und zum Anwenden der mindestens ersten und der zweiten Pseudozufallszahlenfolge auf ein Netzwerkkabel. Die erste und die zweite Pseudozufallszahlenfolge unterscheiden sich voneinander; Das Gerät umfasst ferner einen Empfänger zum Empfangen der Antwort des Netzwerks auf die Anwendung der ersten und zweiten Pseudozufallszahlenfolge, und zum Kennzeichnen von Netzverkabelung als Antwort darauf dadurch, dass die Antwort des Netzwerkkabels mit mindestens der mindestens ersten und der mindestens zweiten Pseudozufallszahlenfolge verknüpft wird.

Die Aufgabe der Erfindung liegt nunmehr darin, ein Verfahren zur Bestimmung der Qualität eines solchen beispielsweise mit PE oder mit Papier ummantelten Kabels zu schaffen, das sich kostengünstig mit einfachen respektive mit vorhandenen Mitteln umsetzen lässt und das letztendlich zu einer aussagekräftigen und gegebenenfalls den Anforderungen einer Normierung genügenden Qualitätsangabe führt.

Diese Aufgabe wird durch das Verfahren mit den Merkmalen des Anspruch 1 gelöst. Vorteilhafte Ausgestaltungen sind in den Unteransprüchen genannt.

Der wesentliche Grundgedanke der Erfindung liegt zusammengefasst darin, Messwerte soweit zu korrigieren und über Bereiche zu mitteln, dass sich letztendlich eine Größe bestimmen lässt, die im Verhältnis zur objektiven Qualität eines Kabels steht und die damit einen Vergleich zwischen verschiedenen Kabeln zulässt. Um dieser Anforderung zu genügen, werden die Messwerte einer Messreihe mit frequenzabhängigen Referenzwerten korrigiert, so dass zunächst eine korrigierte Messreihe entsteht. Die Referenzwerte werden dabei mittels einer definierten Referenzfunktion bestimmt. Vorteilhafterweise wird die Messreihe in diesem Schritt um eine bekannte Funktionalität, insbesondere um eine logarithmische Abhängigkeit bekannter Steigung insbesondere von 15dB reduziert, so dass beispielsweise lineare Abhängigkeiten hervortreten. Nachfolgend werden zumindest aus einem Teil des Frequenzintervalls Werte der korrigierten Messreihe herausgegriffen und ein Mittelwert gebildet. Vorteilhafterweise werden Mittelwerte über mehrere Frequenzintervalle gebildet.

Auf der Grundlage dieser Mittelwerte kann die Referenzfunktion korrigiert werden. Aus dieser korrigierten Referenzfunktion lässt sich nun bei einer definierten Frequenz ein Wert herausgreifen, der dann einen zum Vergleich verschiedener Kabel geeigneten Qualitätsfaktor bildet. Es können Teilintervalle von unterschiedlicher Frequenzbandbreite gewährt werden, wobei insbesondere Teilintervalle geringer Frequenzbandbreite bei niedrigen Frequenzen gewählt werden.

Vorteilhafterweise wird diese Vorgehensweise an einer repräsentativen Auswahl an Paaren von Doppeladern des einen Kabels durchgeführt, was zu einer entsprechenden Menge von Mittelwerten führt, aus denen einer zur Bestimmung des Qualitätsfaktor herausgegriffen wird. Dabei kann beispielsweise ein Extremalwert aller Mittelwerte ausgewählt und zur Berechnung des Qualitätsfaktors des Kabels genutzt werden.

Mit der erfindungsgemäße Vorgehensweise wird ein abgesichertes Messverfahren zur Verfügung gestellt, das systematisch ist und nach einem einheitlichen Schema arbeitet. Es basiert auf einem analytischen, mathematischen Bewertungsverfahren und ergibt damit einen aussagekräftigen Qualitätsfaktor. So ist es bei Einsatz der Erfindung möglich, die Qualität von Kabeln, wie Erdkabeln, in Abhängigkeit des Kabeltyps als relevante Eingangsgröße für die Beschaltungsregeln mit einer ausreichenden statistischen Sicherheit zu kategorisieren. Nach dem Messverfahren werden NEXT(f) Messungen verschiedener Doppelader Beziehungen gemessen, verglichen und dokumentiert.

Da somit einige absolute Kopplungen in einem Raumbereich bekannt sind, ist es möglich, über ein Nebensprechmodell, also über die statistische Verteilung der Anzahl und der relativen Stärken der Nebensprechkopplungen innerhalb von Raumbereichen, eine Aussage über die statistische Verteilung der Anzahl und der absoluten Stärken der Nebensprechkopplungen innerhalb der Raumbereiche und der absoluten Qualität dieser Kabel zu treffen. Damit sind letztendlich auch Vorhersagen zu verfügbaren Bitraten von xDSL Systemen möglich, die über diese Kabel bei entsprechender Verteilung innerhalb dieser Kabel geführt werden.

Indem die Nebensprech-Beziehungen entsprechend dem erfindungsgemäßen Verfahren messtechnisch aufgenommen und anschließend ausgewertet werden, ist es beispielsweise möglich ein PE-Kabel oder ein Papier-Kabel in eine bestimmte Qualitätskategorie einzuordnen. Das ist vorteilhaft, da nun über die Trennungsbedingungen ein für das betreffende Kabel möglichst optimaler Beschaltungsgrad erreicht werden kann, der die Beeinflussungen der verschiedenen Übertragungssysteme untereinander auf ein vertretbares Niveau begrenzt.

Schließlich zeigen die Erfahrungen im Netzbetrieb, dass insbesondere Übertragungssysteme, deren Funktion, wie bei den SDSL-Varianten, hauptsächlich vom NEXT bestimmt werden, bei der Verwendung von Kabeln geringer Qualität erhebliche Einschränkungen erfahren. Dabei bezieht sich die Kabelqualität hier primär auf die Nebensprechkopplungen, die maßgeblich von der Güte der Verdrillung der Doppeladern abhängen. Schlechtere NEXT-Eigenschaften eines Kabels wirken sich erfahrungsgemäß aber nicht in vollem Umfang, sondern nur anteilig auf das FEXT aus. Dies erlaubt für FEXT-bestimmte Systeme, die wie ADSL und VDSL mit Frequenzlage-Trennung arbeiten, auch bei schlechteren Kabelqualitäten noch relativ hohe Beschaltungsdichten. Entsprechend der Erfindung wird somit die Kategorisierung eines Kabels ausschließlich anhand seines frequenzabhängigen NEXT vorgenommen. Dazu werden erfindungsgemäß eine Reihe von Einzelmessungen an freien Doppeladern des Kabels vorgenommen, wobei gilt: Je größer die Anzahl dieser Messungen, desto besser das Ergebnis.

Vorteilhaft ist es, die Messungen an möglichst gleich langen freien Doppeladern des zu untersuchenden Kabels, dessen Kabellänge vorteilhafterweise mindestens 75 m ist, durchzuführen. Dabei ist der Zugang zu nur jeweils einem Kabelende erforderlich. Auf einem angepassten Widerstandsabschluss am anderen Ende kann verzichtet werden, da der Verlauf der Messkurven im Mittel davon kaum beeinflusst wird. Die NEXT-Dämpfungsmaße in der Einheit dB zwischen den Doppeladern, vorteilhafterweise die "Imvierer-" (IMV) und die "Nebenvierer" (NV) Werte, können mit einem geeigneten Mess-System, insbesondere auf der Basis des bekannten ELQ30, mit ansteigender Frequenz des Sendesignals nacheinander aufgenommen und abgespeichert werden.

Das erfindungsgemäße Bewertungsverfahren der gemessenen NEXT(f) beruht auf theoretischen und praktischen Überlegungen und ist vorteilhafterweise auf die gleichen Normwerte und Maßstäbe bezogen, die in der Praxis den Beschaltungsregeln von Vielfachkabeln zugrunde liegen. Ganz generell führen die Messergebnisse über folgende vereinfacht dargestellte Aktionskette zu den Beschaltungsregeln, also der Systematik, mit der die Kabel in der Praxis beschaltet werden:

Ausgehend von Messungen der NEXT(f), der FEXT(f, I) und der Kabeldämpfung a(f) werden entsprechende Modelle entwickelt. Zusammen mit aufgenommenen Sendeleistungsdichtespektren PSD(f) verschiedener xDSL-Systeme werden daraus Modelle für den von der Frequenz und der Kabellänge abhängigen Signal-Rauschabstand SNR(f, I) generiert. Performancemessungen der xDSL-Systeme über eine Störkoppelmatrix zum Beispiel in einer Kabelversuchsanlage führen letztendlich zu Beschaltungsregeln. Das Messverfahren ist dabei vorteilhafterweise auf das auf das vorhandene Betriebsmessgerät ELQ 30 abgestimmt lässt sich aber auch für alle anderen Messgeräte mit denen sich die Übersprechkopplung bestimmen lässt problemlos anwenden.

Das erfindungsgenmäße Verfahren, das als Grundlage einer zumindest Netzbetreiber internen Normierung dienen kann, lässt sich besonders vorteilhaft im Falle vierer verseilter Bündelkabel anwenden. Diese Bündelkabel bilden meist den größten Teil eines Netzes. Bei vierer verseilter Lagenkabeln, bei denen beispielsweise die Vierer mit je zwei Doppeladern nicht in Bündeln sondern in kreisförmigen Lagen um den Kabelmittelpunkt angeordnet sind, oder bei paarverseilten Kabeln kann das Verfahren, in gleicher Form erfolgreich angewendet werden, wobei gegebenenfalls die Steigung der Referenzkurve in vorteilhafter weise an die Kabelart angepasst werden kann.

Vorzugsweise werden Qualitätsfaktoren über eine repräsentative Zahl von Doppeladern innerhalb des Kabels ermittelt, wobei ein Maximalwert als Qualitätsfaktor des gesamten Kabels definiert wird. Insbesondere umfasst die repräsentative Zahl von Doppeladern alle "Imvierer" Beziehungen und einige "Nebenvierer" Beziehungen.

Das erfindungsgemäße NEXT(f) Messverfahren wird nachfolgend anhand von Ausführungsbeispielen und anhand der Figuren 1 bis 6 näher erklärt. Es zeigen:

Figur 1    ein Schema eines Kabels mit NEXT Kopplung,
Figur 2    Messkurven zweier unterschiedlich starker NEXT-Kopplungen,
Figur 3    eine Messkurve mit Referenzfunktion,
Figur 4    eine korrigierte Messkurve,
Figur 5    eine korrigierte Messkurve mit Mittelwerten und
Figur 6    eine Messkurve mit korrigierter Referenzfunktion.

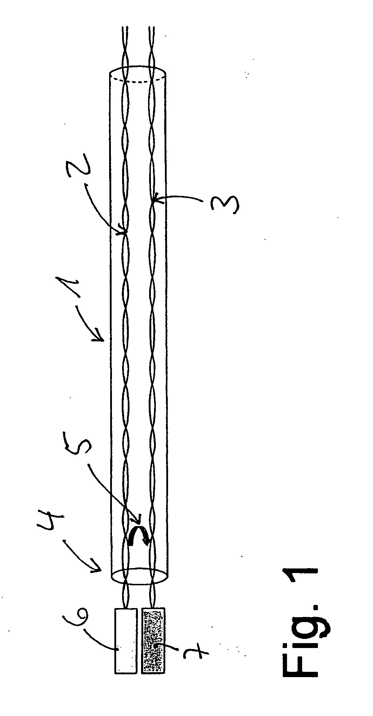

In Figur 1 ist ein Kabel 1 mit zwei symbolisch angedeuteten Doppeladern 2 und 3 gezeigt, die wiederum jeweils zwei verdrillte Adern aufweisen. Das Kabel 1 ist von beliebiger Länge. An einem Ende 4 des Kabels 1 ist eine Anordnung zur Messung des durch den Pfeil 5 angedeuteten Nahbereichnebensprechens (NEXT) vorgesehen. Diese Anordnung hat einen Sender 6, der ein Signal bestimmter Frequenz in die Doppelader 2 einkoppelt, während ein Empfänger 7 das auf die Doppelader 3 durch NEXT übergegangene Störsignal aufnimmt.

In dem Ausführungsbeispiel wurden die Messungen im relevanten Frequenzbereich zwischen 60 kHz und 18 MHz in 60 kHz Schritten durchgeführt. Am ELQ30 wurde der Messmodus entsprechend auf "Dämpfungsmessung" und die Messimpedanz auf 135 Ohm eingestellt.

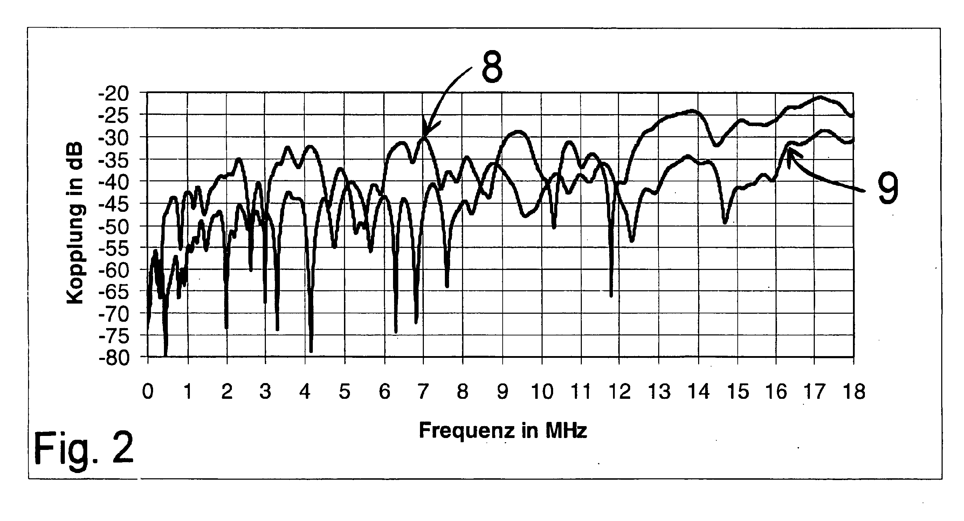

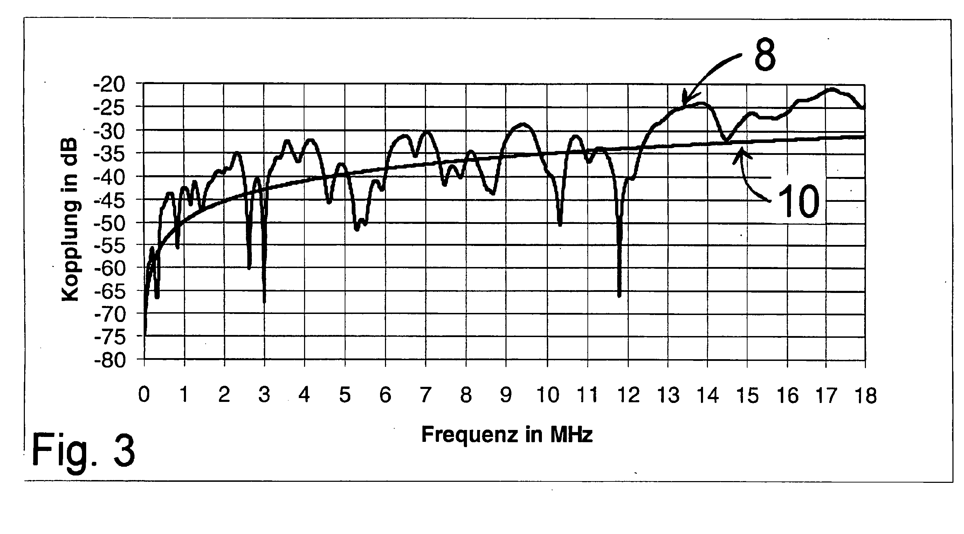

In Figur 2 ist ein Diagramm gezeigt, wie es mit der Vorrichtung nach Figur 1 aufgenommen werden kann. In dem Diagram ist, wie bei den nachfolgenden auch, auf der Abszisse die Frequenz und auf der Ordinate die Grösse der jeweiligen NEXT Kopplung aufgetragen ist. In dem Diagramm sind zwei Messkurven 8 und 9 eingetragen, wobei die obere 8 eine verhältnismäßig starke und die untere 9 eine verhältnismäßig schwache Kopplung wiederspiegelt. Deutlich zu erkennen ist, dass die Verläufe der NEXT(f) Kopplungen unstetig und stark resonanzbehaftet sind. Zu sehen ist auch, dass der grundsätzliche Verlauf eine Steigung von etwa 15 dB/Dekade aufweist. Ein solcher resonanzfreier Kurvenverlauf 10 einer "Referenz NEXT(f)" mit einer Steigung von 15 dB pro Dekade und einer willkürlich gewählten Kopplung von 50dB bei 1 MHz ist in Figur 3 zusammen mit der Messkurve 8 gezeigt. Die Konstante der Referenz NEXT(f), in diesem Beispiel 50dB, ist im Prinzip frei wählbar, wird jedoch erfindungsgemäß nach der Festlegung innerhalb des Berechnungsverfahrens beibehalten. Die hier gewählten 50 dB charakterisieren eine besonders realistische Größenordnung.

Eine solche Funktion ist nachfolgend angeführt und kann als Referenzfunktion dienen:

$$NEXT_{referenz}(f) = -50 + 15 \cdot \log_{10}(f / MHz) \qquad (1)$$

Im nächsten Schritt wird diese Referenzfunktion von der Kurve der gemessenen starken NEXT(f) Kopplung abgezogen. Damit lautet die Funktion:

$$\Delta NEXT(f) = NEXT(f) - NEXT_{referenz}(f) \qquad (2)$$

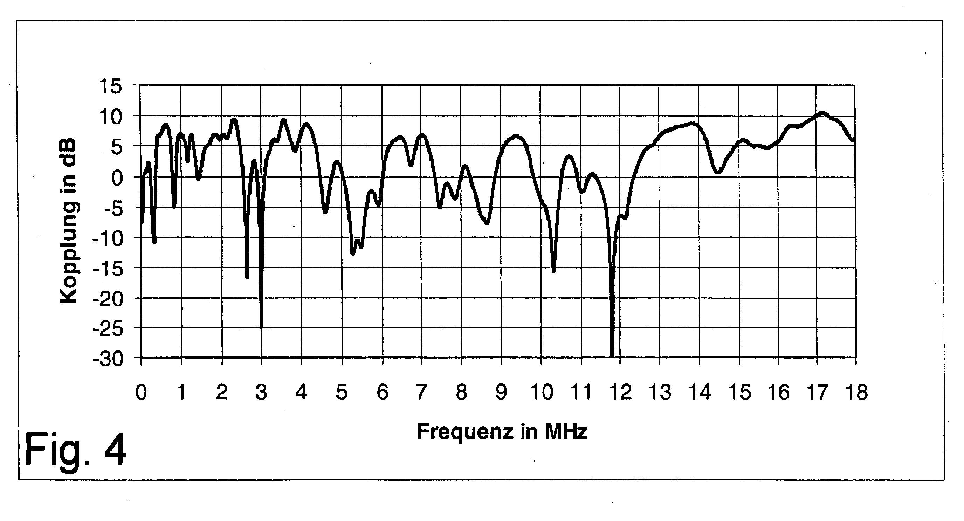

Die verbleibende Kurve, die idealerweise nur noch die Abweichungen enthält, ist in Figur 4 dargestellt. Weil diese NEXT(f) den gleichen tendenziellen Verlauf mit etwa 15 dB/Dekade wie die Referenzkurve aufweist, ist folglich der tendenzielle Verlauf dieser Differenz annähernd horizontal. Somit kann innerhalb beliebiger Frequenzbereiche mit einem nur geringen Fehler über die Werte gemittelt werden.

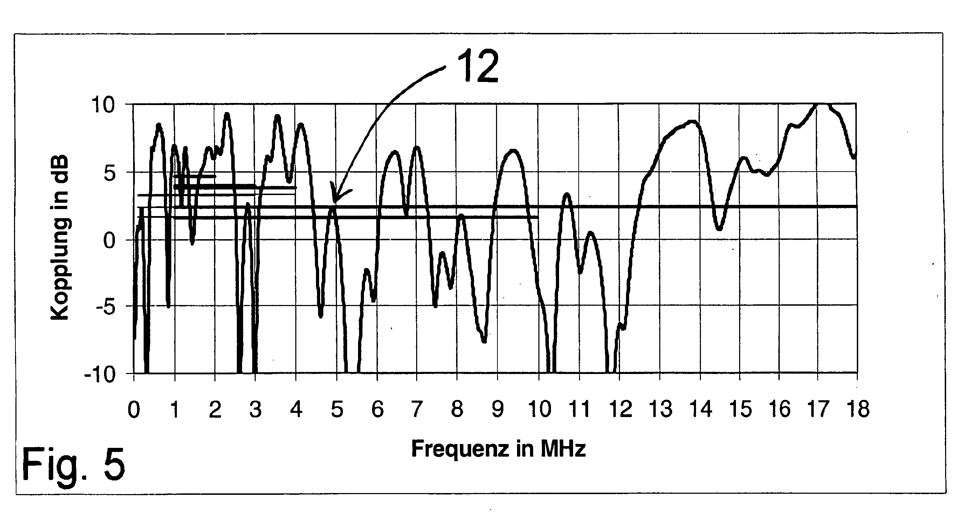

In Figur 5 ist die Funktion ΔNEXT(f) nach Figur 4 mit mehreren darin enthaltenen arithmetischen Mittelwerten (horizontale Strecken bestimmter Länge) 12 gezeigt, wobei diese Mittelwerte für verschiedene Teilintervalle des gesamten Frequenzintervalls gebildet wurden. Um diese Mittelwerte zu gewinnen, werden alle einzelnen Messwerte der ΔNEXT(f) innerhalb eines Frequenzintervalls addiert und durch die Anzahl der Messpunkte geteilt. Die des Mittelwertsbildung erfolgt nach der symbolischen Funktion

$$Mw\Delta NEXT(M) = \frac{1}{M} \times \sum_{m=1}^{M}(N_m(f_m) - R_m(f_m)) \qquad (3)$$

wobei M die Anzahl der Messpunkte innerhalb eines Intervalls ist und gilt:

$$Mw = Mittelwert, N_m(f_m) = NEXT_m(f_m), R_m(f_m) = referenzNEXT_m(f_m), \Delta = Delta \qquad (4)$$

Weil der grundsätzliche Verlauf aber mit der Frequenz steigt, würde eine direkte Mittelung einzelner Kopplungsanteile innerhalb eines Frequenzbereichs grundsätzlich die Kopplungsanteile bei höheren Frequenzen überbewerten. Aus dieser Berechnung wird der größte Mittelwert entnommen, um damit die Referenzfunktion nach folgender Gleichung zu korrigieren:

$$NEXT_{\ddot{a}quivalent}(f) = NEXT_{referenz}(f) + Mw\Delta NEXT(M) \qquad (5)$$

oder anders ausgedrückt:

$$NEXT_{\ddot{a}quivalent}(f) = -50 + 15 \cdot \log_{10}(f/MHz) + Mw\Delta NEXT(M) \qquad (6)$$

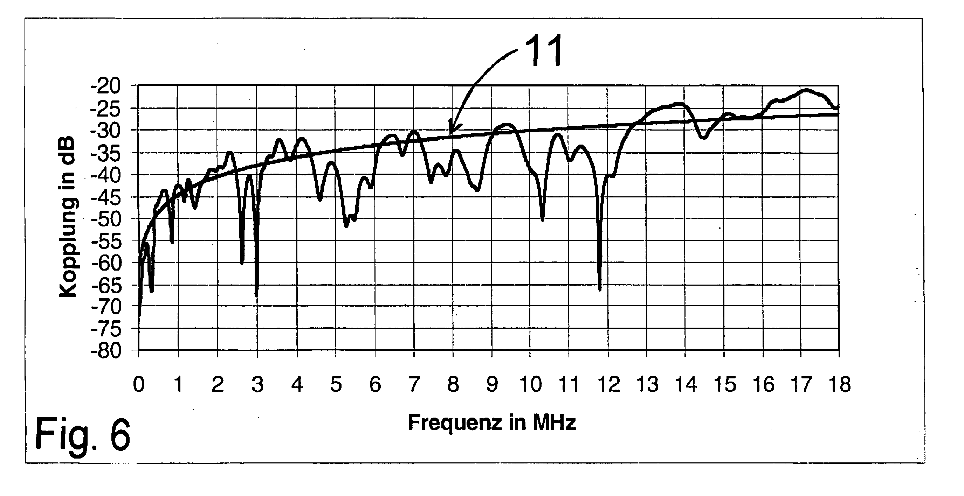

Diese Funktion ist nunmehr in Figur 6 dargestellt, wobei anhand der in der Figur ebenfalls noch ersichtlichen Messwerte zu erkennen ist, dass die korrigierte Referenzkurve 11 in diesem Beispiel etwas nach oben verschoben ist. Sie stellt damit einen guten Repräsentanten der Messkurve dar und beschreibt die Wirkung auf den Signal-Geräusch-Abstand der betroffenen xDSL Systeme nahezu äquivalent zur Wirkung der ursprünglichen resonanzförmigen *NEXT(f)* Funktion. Auf der Grundlage dieses erfindungsgemäßen Formalismus, mit dem sich die resonanzbehaftete Messkurve gut durch eine standardisierte Funktion (*NEXT<sub>äquivalent</sub>(f)*) annähren lässt, genügt die Angabe eines einzigen Wertepaares, um die Übertragungsqualität eines Vielfachkabels praxisnah zu beschreiben. Üblicherweise wählt man den Wert der korrigierten Referenzkurve bei einer vorbestimmten Frequenz von 1MHz (*NEXT<sub>äquivalent</sub>(1MHz)*), um die NEXT Kopplung eindeutig zu beschreiben und damit vergleichbar zu machen.

Wird die Richtigkeit der oben genannten NEXT(f)-, FEXT(f, l)-, a(f)-Modelle unterstellt, wobei als Eingangswert für die Referenzkurve des "Normkabels" vorteilhafterweise 49dB bei 1 MHz anzusetzen ist, so leitet sich die statistische Verteilung der Kopplungen innerhalb eines Kabels und die entsprechende Summenkopplung aller übrigen Doppeladern gegenüber einer einzigen Doppelader aus der stärksten NEXT(f) Kopplung ab.

Wird nun beispielsweise bei der Qualifizierung eines Kabels mittels des beschriebenen Verfahrens die stärkste NEXT(f) Kopplung mit einem Betrag von 42dB bei 1 MHz ermittelt, bedeutet das, dass dieses Kabel eine um 7dB stärkere Nebensprechkopplung oder eine um 7dB geringere Qualität als die des unterstellten Normkabels aufweist. Als Konsequenz ergäbe sich dann für die Praxis, entweder die Norm Plandämpfung von xDSL Systemen zu reduzieren und/oder entsprechende Trennungsbedingungen einzuhalten.

In einer vorteilhaften Ausführungsform werden die ermittelten Daten in Tabellen, beispielsweise mit dem Tabellenkalkulations-Programm "Excel" von Microsoft, importiert und zur automatischen Auswertung gebracht. Dabei reicht es bei einem Kabelbündel mit 10 Doppeladern nicht alle 45 möglichen sondern nur 15 ausgewählte Doppeladerbeziehungen mit dem nachfolgend zu beschreibenden Schema durchzuführen. An diesen Messungen wird die Doppeladerbeziehung mit der stärksten NEXT Dämpfung ermittelt. Dabei hat sich gezeigt, dass die Ausmessung der 15 Doppeladerbeziehungen ausreicht, um einen aussagekräftigen Wert für die Qualität des gesamten Kabels zu erhalten.

Zunächst werden alle "Imvierer" Beziehungen, also im Falle eines Kabelbündels mit 10 Doppeladern $NEXT_{1-2}$, $NEXT_{3-4}$, $NEXT_{5-6}$, $NEXT_{7-8}$ und $NEXT_{9-10}$ ausgemessen, wobei $NEXT_{1-2}$ die Beziehung zwischen den Doppeladern 1 und 2 bezeichnet. Zudem werden noch 10 Nebenvierer Beziehungen gemessen, wobei "messen" bedeutet, dass beispielsweise in Schritten von 60 kHz Signale generiert und die NEXT Kopplung aufgenommen wird. Das bedeutet, dass im Bereich von 60 kHz bis 18 MHz 300 Werte ermittelt und in die Spalte einer Tabelle eingetragen werden. Insgesamt werden 15 Spalten angelegt.

Im nächsten Schritt werden die Messwerte einer jeden Messreihe mit frequenzabhängigen Referenzwerten korrigiert, so dass eine korrigierte Messreihe von $\Delta NEXT(f)$ Werten entsteht, wobei diese Korrektur, wie oben beschrieben, im Wesentlichen darin besteht, die logarithmische Abhängigkeit herauszuholen. Die Referenzwerte werden dazu mittels einer Referenzfunktion, wie sie in der Formel (1) beschrieben ist, bestimmt. Im nächsten Schritt werden diese $\Delta NEXT(f)$ über verschiedene Frequenz-Intervalle unterschiedlicher Länge gemittelt, wobei vorteilhafterweise mehr Intervalle in den Bereich der niedrigeren Frequenzen gelegt werden. Der "individuelle" Maximalwert der Mittelwerte wird zunächst von jeder gemessenen Doppeladerbeziehung gesucht, bevor nachfolgend der generelle Maximalwert aller individuellen Maximalwerte ermittelt wird Dieser generelle Maximalwert kann dann herhalten, um die Referenzfunktion zu einer kabelindividuellen korrigierten Referenzfunktion zu korrigieren. Aus dieser korrigierten Referenzfunktion lässt sich nun bei einer definierten Frequenz, beispielsweise bei 1 MHz, ein Wert berechnen, der dann einen zum Vergleich geeigneten Qualitätsfaktor bildet und die Qualität des Kabels bestimmt.

Da es Telkommunikationskabel mit bis zu 2000 Doppeladern und 200 Kabelbündeln (Grundbündeln) gibt, ist es zur Erhöhung der statistischen Vertrauenswürdigkeit vorteilhaft, das beschriebene Messverfahren an mehreren, insbesondere bei bis zu sechs, verschiedenen Grundbündeln innerhalb des Kabels in Abhängigkeit der Anzahl der Doppeladern nach einem noch festzulegenden Schema zu wiederholen. Es können auch nur einzelne Bereiche innerhalb eines Kabels qualifiziert werden, wenn dies für das gesamte Kabel nicht erforderlich ist.

Es sei an dieser Stelle noch darauf hingewiesen, dass die Messwerte von den verschiedenen Messgeräten bei mit unterschiedlichem Vorzeichen, insbesondere als negative S-Parameter oder positive Dämpfungswerte, ausgegeben. Ein negativer S-Parameterwert entspricht einem positiven Dämpfungswert entsprechender Größe. Derart verschiedenen Vorzeichen bei sonst gleichen Betragswerten sind immer "richtig" im Sinne der Erfindung zu behandeln.

**Patentansprüche**

1. Verfahren zur Bestimmung der Qualität eines zur Übertragung elektrischer Signale geeigneten Kabels (1) mit mehreren Adern, insbesondere mit mehreren Doppeladern (2,3) miteinander verdrillter Aderpaare, wobei zwei an einem Ende des Kabels austretende Adern (2,3) ausgewählt werden, wobei im Rahmen einer Messung ein Testsignal bestimmter Frequenz über die erste Ader (2) gesendet und das von dem Testsignal erzeugte Kopplungssignal in der zweiten Ader (3) registriert wird, wobei eine Vielzahl von über ein Frequenzintervall erhobenen Messwerten eine Messreihe (8,9) bilden und wobei aus einer oder mehreren Messreihen auf die Qualität des Kabels (1) geschlossen wird,
   **dadurch gekennzeichnet,**
   **dass** die Messwerte einer Messreihe (8,9) mit frequenzabhängigen Referenzwerten (10) korrigiert werden und eine korrigierte Messreihe bilden, wobei die Referenzwerte mittels einer Referenzfunktion bestimmt werden,
   **dass** aus Werten der korrigierten Messreihe in zumindest einem Teil des Frequenzintervalls (12) ein Mittelwert gebildet wird,
   **dass** die Referenzfunktion auf Grundlage des Mittelwertes korrigiert wird und
   **dass** der Wert der korrigierten Referenzfunktion (11) bei einer festgelegten Frequenz den Qualitätsfaktor bildet.

2. Verfahren nach Anspruch 1,
   **dadurch gekennzeichnet,**
   **dass** als Referenzfunktion ein dekadischer Logarithmus mit einer festgelegten Steigung, insbesondere mit 15 dB pro Dekade, und einer bestimmten Kopplung, beispielsweise 50dB bei 1 MHz, gewählt wird.

3. Verfahren nach Anspruch 1 oder 2,
**dadurch gekennzeichnet,**
**dass** zum Zweck der Korrektur zwischen den Messwerten der Messreihe und der Referenzfunktion die Differenz gebildet wird.

4. Verfahren nach einem der vorherigen Ansprüche,
**dadurch gekennzeichnet,**
**dass** zur Bestimmung des Mittelwertes mehrere Teilintervalle aus dem gesamten Frequenzintervall der korrigierten Messreihe herausgegriffen werden, wobei in Teilintervallen jeweils ein Mittelwert gebildet wird, wobei die Referenzfunktion auf der Grundlage eines der gebildeten Mittelwerte korrigiert wird.

5. Verfahren nach Anspruch 4,
**dadurch gekennzeichnet,**
**dass** Teilintervalle von unterschiedlicher Frequenzbandbreite gewählt werden,

6. Verfahren nach Anspruch 4,
**dadurch gekennzeichnet,**
**dass** die Referenzfunktion auf der Grundlage des maximalen Mittelwertes korrigiert wird.

7. Verfahren nach einem der vorherigen Ansprüche,
**dadurch gekennzeichnet,**
**dass** zur Bildung eines Mittelwertes das arithmetische Mittel über die im jeweiligen Frequenzintervall vorhandenen Messwerte berechnet wird.

8. Verfahren nach einem der vorherigen Ansprüche,
**dadurch gekennzeichnet,**
**dass** der ermittelte Qualitätsfaktor ins Verhältnis zum Qualitätsfaktor eines Normkabels gesetzt wird, wobei für das Normkabel als Eingangswert insbesondere 49dB bei 1 MHz angesetzt werden.

9. Verfahren nach einem der vorherigen Ansprüche,
**dadurch gekennzeichnet,**
**dass** Qualitätsfaktoren über eine repräsentative Zahl von Doppeladern innerhalb des Kabels ermittelt werden, wobei ein Maximalwert als Qualitätsfaktor des gesamten Kabels definiert wird.

**Claims**

1. A method for the detection of the quality of a cable (1) adapted for transmitting electrical signals and having several wires, in particular several double wires (2, 3) consisting of pairs of wires twisted with each other, wherein two wires (2, 3) exiting at one end of the cable are selected, wherein in the context of a measurement a test signal having a defined frequency is transmitted via the first wire (2) and the coupling signal generated by the test signal in the second wire (3) is recorded, wherein a plurality of measuring values determined over a frequency interval constitutes a series of measurements (8, 9), and wherein the quality of the cable (1) is deduced from one or more series of measurements,
**characterised in that** the measuring values of a series of measurements (8, 9) are corrected with frequency-dependent reference values (10) and constitute a corrected series of measurements, wherein the reference values are determined by means of a reference function,
that an average value is formed from values of the corrected series of measurements over at least a part of the frequency interval (12),
that the reference function is corrected based on the average value, and
that the value of the corrected reference function (11) at a defined frequency constitutes the quality factor.

2. The method according to claim 1,
**characterised in that** a decadic logarithm having a defined gradient, in particular with 15 dB per decade, and a defined coupling, for example 50 dB at 1 MHz, is chosen as the reference function.

**3.** The method according to claim 1 or 2,
**characterised in that** the difference between the measuring values of the series of measurements and the reference function is formed for the purpose of correction.

**4.** The method according to any one of the preceding claims,
**characterised in that** for determining the average value a plurality of part intervals are taken from the whole frequency interval of the corrected series of measurements, wherein in the part intervals a respective average value is formed, wherein the reference function is corrected based on one of the formed average values.

**5.** The method according to claim 4,
**characterised in that** part intervals of different frequency band width are selected.

**6.** The method according to claim 4,
**characterised in that** the reference function is corrected based on the maximum average value.

**7.** The method according to any one of the preceding claims,
**characterised in that** for the formation of an average value, the arithmetic means is computed over the measuring values present in the respective frequency interval.

**8.** The method according to any one of the preceding claims,
**characterised in that** the determined quality factor is set into relation with the quality factor of a standard cable, wherein in particular 49 dB at 1 MHz is set as the start value of the standard cable.

**9.** The method according to any one of the preceding claims,
**characterised in that** quality factors are determined over a representative number of double wires within the cable, wherein one maximum value is defined as the quality factor of the whole cable.

**Revendications**

**1.** Procédé de détermination de la qualité d'un câble (1) convenant à la transmission de signaux électriques et comportant plusieurs conducteurs, notamment plusieurs conducteurs doubles (2,3) de paires torsadées, deux conducteurs (2, 3) sortant à une extrémité du câble étant choisis, un signal test d'une fréquence donnée étant émis via le premier conducteur (2) dans le cadre d'une mesure, et le signal de couplage généré par le signal test étant enregistré dans le deuxième conducteur (3), une pluralité de mesures recueillies au cours d'un intervalle de fréquence formant une série de mesures (8,9) et la qualité du câble (1) étant déterminée à partir d'une ou plusieurs séries de mesures, **caractérisé en ce que** les mesures d'une série de mesures (8,9) sont corrigées à l'aide de valeurs de référence (10) dépendant de la fréquence et forment une série de mesures corrigée, les valeurs de référence étant déterminées moyennant une fonction de référence, **en ce qu'**une moyenne est formée à partir des mesures de la série de mesures corrigée dans au moins une partie de l'intervalle de fréquence (12),
**en ce que** la fonction de référence est corrigée sur la base de la moyenne et
**en ce que** la valeur de la fonction de référence (11) corrigée à une fréquence définie forme le facteur de qualité.

**2.** Procédé selon la revendication 1,
**caractérisé en ce qu'**un logarithme décimal ayant une pente définie, notamment de 15 dB par décade, et un couplage donné, par exemple 50 dB à 1 MHz, est choisi.

**3.** Procédé selon l'une des revendications 1 ou 2,
**caractérisé en ce que**, aux fins de la correction, la différence entre les mesures de la série de mesures et la fonction de référence est formée.

**4.** Procédé selon l'une des revendications précédentes,
**caractérisé en ce que**, pour déterminer la moyenne, plusieurs intervalles partiels sont choisis dans l'ensemble de l'intervalle de fréquence de la série de mesures corrigée, une moyenne étant respectivement formée dans des intervalles partiels, la fonction de référence étant corrigée sur la base de l'une des moyennes formées.

**5.** Procédé selon la revendication 4,
**caractérisé en ce que** des intervalles partiels de largeur de bande de fréquence différente sont choisis.

**6.** Procédé selon la revendication 4,
**caractérisé en ce que** la fonction de référence est corrigée sur la base de la moyenne maximale.

**7.** Procédé selon l'une des revendications précédentes,
**caractérisé en ce que**, pour former une moyenne, la moyenne arithmétique des mesures présentes dans l'intervalle de fréquence respectif est calculée.

**8.** Procédé selon l'une des revendications précédentes,
**caractérisé en ce que** le facteur de qualité obtenu est mis en rapport avec la qualité d'un câble normalisé, la valeur d'entrée du câble normalisé étant fixée notamment à 49 dB et à 1 MHz.

**9.** Procédé selon l'une des revendications précédentes,
**caractérisé en ce que** les facteurs de qualité sont déterminés sur un nombre représentatif de conducteurs doubles à l'intérieur du câble, une valeur maximale étant définie comme facteur de qualité du câble complet.

Fig. 1

Fig. 2

EP 2 096 770 B1

Fig. 3

EP 2 096 770 B1

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050012508 A1
- US 5821760 A

- EP 1193907 A2